(19) Europäisches Patentamt
European Patent Office
Office européen des brevets

(11) EP 2 042 349 B1

(12) # EUROPEAN PATENT SPECIFICATION

(45) Date of publication and mention of the grant of the patent:
**13.03.2013 Bulletin 2013/11**

(21) Application number: **07767427.3**

(22) Date of filing: **22.06.2007**

(51) Int Cl.:
***B60C 17/00*** *(2006.01)* ***B60C 9/00*** *(2006.01)*
***B60C 13/00*** *(2006.01)*

(86) International application number:
**PCT/JP2007/062618**

(87) International publication number:
**WO 2008/010388 (24.01.2008 Gazette 2008/04)**

(54) **RUN-FLAT TIRE**

RUN-FLAT-REIFEN

PNEU POUVANT ROULER A PLAT

(84) Designated Contracting States:
**DE ES FR GB IT**

(30) Priority: **19.07.2006 JP 2006197086**

(43) Date of publication of application:
**01.04.2009 Bulletin 2009/14**

(73) Proprietor: **Bridgestone Corporation**
**Tokyo 104-8340 (JP)**

(72) Inventor: **MAEHARA, Daisuke**
**Kodaira-shi**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
**EP-A1- 1 857 299**
**WO-A1-2006/077973**
**JP-A- 11 278 019**
**JP-A- 2000 264 012**
**JP-A- 2000 264 012**
**JP-A- 2001 164 422**
**JP-A- 2001 262 437**
**JP-A- 2002 002 238**
**JP-A- 2002 339 275**
**JP-A- 2003 013 326**
**JP-A- 2004 091 969**
**JP-A- 2004 306 658**
**JP-A- 2004 306 658**
**JP-A- 2006 321 280**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 042 349 B1

**Description**

TECHNICAL FIELD

This invention relates to a run-flat tire, and more particularly to a run-flat tire in which ride comfort in usual running is improved and tire weight is reduced with maintaining run-flat durability, rough road durability and uniformity.

BACKGROUND ART

As a tire capable of safely running over a certain distance without losing an ability bearing a load of the tire even if an internal pressure of the tire is dropped due to the puncture or the like or a so-called run-flat tire, there have hitherto been proposed various kinds of run-flat tires of side reinforcement type wherein a side-reinforcing rubber layer having a relatively high modulus and a crescent shape at section is disposed inside a carcass at a side portion of the tire to enhance a rigidity of the side portion and hence the load can be born without extremely increasing the flexible deformation of the side portion in the dropping of the internal pressure (see JP-A-2000-264012, JP-A-2002-500587, JP-A-2002-500589 and JP-A-2004-306658 and the late published application EP-A- 185 72 99).

However, the run-flat tire of side reinforcement type comprises the side reinforcing rubber layer having the crescent shape at section in the side portion and thereby has a larger longitudinal spring as compared with a normal tire and has a problem that the ride comfort in the usual running is deteriorated. Also, since the run-flat tire of side reinforcement type comprises the side reinforcing rubber layer, it has an increased tire weight as compared with a normal tire and has a problem that steering stability is deteriorated due to an increase in unsprung weight. Further, the run-flat tire of side reinforcement type has no small adverse effect on durability of a vehicle due to an increase in a vehicle input caused by the tire weight increase.

In this context, it is heretofore useful (1) to reduce a gauge of the side reinforcing rubber layer and (2) to reduce the number of the carcass plies (for example, from two plies to one ply) in order to reduce the tire weight. However, the run-flat durability of the tire is sacrificed even if any one of means is taken, so that it is difficult to simultaneously establish an improvement in the run-flat durability and an decrease in the tire weight.

In particular, it is difficult to carry out the above-described (2) in many cases, because it is necessary to ensure the durability and safety during the running on a rough road under usual internal pressure (rough road durability) against an instant large input on an uneven road surface (projections, pot holes) or a heaving road or against a local input (side cut) to the sidewall. Therefore, two or more carcass plies must be commonly used in most cases.

Moreover, as a means for decreasing the tire weight with ensuring the run-flat durability and the rough road durability, there is heretofore a method wherein the structure of the carcass is rendered into a so-called envelop structure by extending a turnup end of a carcass ply beneath a belt, but the tire uniformity is notably deteriorated in many cases, because a turnup carcass ply is not evenly wound up and joint portions of the carcass ply are overlapped.

DISCLOSURE OF THE INVENTION

It is, therefore, an object of the invention to solve the above-mentioned problems of the conventional techniques and to provide a run-flat tire in which the ride comfort in the usual running is improved and the tire weight is reduced with maintaining the run-flat durability, the rough road durability and the uniformity.

The inventor has made various studies in order to achieve the above objects and discovered that the ride comfort in the usual running can be improved and further the tire weight can be reduced while maintaining the run-flat durability, the rough road durability and the uniformity by using as a reinforcing cord in a carcass a polyketone fiber cord having particular thermal shrinkage stress and elastic modulus and further arranging a reinforcing cord layer using the polyketone fiber cord having particular thermal shrinkage stress and elastic modulus in at least a part outside the carcass, and as a result the invention has been accomplished.

According to the present invention, there is provided a run-flat line as claimed in claim 1.

The thermal shrinkage stress $\sigma$ at 177°C of the polyketone fiber cord used herein is a stress generated at 177°C in the cord when a sample of the polyketone fiber cord having a fixed length of 25 cm and subjected to a usual dipping treatment prior to vulcanization is heated at a temperature rising rate of 5°C/minute, while the elastic modulus E at 25°C under a load of 49 N of the polyketone fiber cord is an elastic modulus as a unit of cN/dtex calculated from a tangent line at 49 N in S-S curve by a tensile test of the cord according to JIS.

In a preferable embodiment of the run-flat tire according to the invention, an angle of the polyketone fiber cord in the reinforcing cord layer with respect to the radial direction of the tire is not more than 5°.

In the run-flat tire according to the invention, it is preferable that the polyketone fiber cords in the carcass ply and the reinforcing cord layer have an elastic modulus E at 25°C under a load of 49N of 30 to 170 cN/dtex and a thermal shrinkage stress $\sigma$ at 177°C of 0.2 to 1.5 cN/dtex.

According to the invention, there can be provided a run-flat tire using as a reinforcing cord in a carcass a polyketone fiber cord having particular thermal shrinkage stress and elastic modulus and provided with a reinforcing cord layer using the polyketone fiber cord having particular thermal shrinkage stress and elastic modulus in at least a part outside the carcass, in which the ride comfort in the usual running is good and the tire weight is reduced with sufficiently ensuring the run-flat durability, the rough road durability and the uniformity.

BRIEF DESCRIPTION OF THE DRAWINGS

FIG. 1 is a section view of a right-half portion of an embodiment of the run-flat tire according to the invention.
FIG. 2 is a section view of a right-half portion of another embodiment of the run-flat tire according to the invention.
FIG. 3 is a section view of a right-half portion of a run-flat tire which is not according to the invention.
FIG. 4 is a partial section view of a run-flat tire in a run-flat running as analyzed by a computer.
FIG. 5 is a section view of a right-half portion of the run-flat tire in Comparative Examples 1 and 2.
FIG. 6 is a section view of a right-half portion of the run-flat tire in Comparative Example 3.
FIG. 7 is a section view of a right-half portion of the run-flat tire in Comparative Example 4.

BEST MODE FOR CARRYING OUT THE INVENTION

The invention will be described in detail with reference to the accompanying drawings below. FIG. 1 is a partial section view of an embodiment of the run-flat tire according to the invention, and FIG. 2 is a partial section view of another embodiment of the run-flat tire according to the invention. Each of tires shown in FIGS. 1 and 2 comprises a radial carcass 3 having a main body portion toroidally extending between a pair of bead cores 2 embedded in respective bead portions 1 and a turnup portion wound around the bead core 2 from an inside in a widthwise direction of the tire toward an outside and outward in a radial direction, a tread portion 4 disposed at an outside of a crown portion of the radial carcass 3 in the radial direction of the tire, a pair of buttress portions 5 located at both end parts of the tread portion 4, a pair of side portions 6 connecting the buttress portions 5 to the bead portions 1, and a pair of side reinforcing rubber layers 7 disposed inside the radial carcass 3 at the side portion 6 and having a crescent shape at section. Moreover, each of tires shown in FIGS. 1 and 2 comprises a reinforcing cord layer 8 arranged outside the side reinforcing rubber layer 7 and in at least a part of an inside of the radial carcass 3.
In the tires of FIGS. 1 and 2 a bead filler 9 is arranged between the main body portion and the turnup portion of the radial carcass 3 and outside the bead core 2 in the radial direction of the tire, and also a belt 10 comprised of two belt layers is arranged outside the crown portion of the radial carcass 3 in the radial direction of the tire. Further, a belt reinforcing layer 11A is arranged outside the belt 10 in the radial direction of the tire so as to cover the whole of the belt 10, and a pair of belt reinforcing layers 11B is arranged so as to cover only both end portions of the belt reinforcing layer 11A. At this moment, the belt layer is usually a rubberized layer containing cords extending slantly with respect to the equatorial plane of the tire, preferably a rubberized steel cord layer. The two belt layers are laminated so as to cross the cords constituting the belt layers with each other with respect to the equatorial plane of the tire to constitute the belt 10. Also, each of the belt reinforcing layers 11A, 11B is usually a rubberized layer containing cords arranged substantially in parallel to a circumferential direction of the tire.
Moreover, the radial carcass 3 in the tires shown in FIGS. 1 and 2 is comprised of one carcass ply, but the number of carcass plies constituting the radial carcass 3 is not particularly limited thereto in the tire according to the invention and may be two or more. Also, the structure of the radial carcass 3 is not particularly limited, but may have a structure that the end portion of the radial carcass 3 is sandwiched between the bead cores 2 of two layers as shown in a tire of FIG. 3 (which is not according to the invention, and is included for reference).
In the tires of FIGS. 1 and 2, the belt 10 is comprised of two belt layers, but the number of belt layers constituting the belt 10 is not limited thereto in the tire according to the invention. Further, the belt reinforcing layers 11A, 11B in the tires of FIGS. 1 and 2 are constructed with one belt reinforcing layer 11A covering the whole of the belt 10 and one belt reinforcing layer 11B covering only both end portions of the belt reinforcing layer 11A or have a so-called cap-layer structure. In the tire according to the invention, the arrangement of the belt reinforcing layers 11A, 11B is not essential, and the belt reinforcing layers having another structure and layer number may be arranged.
In the tires of FIGS. 1 and 2, a rim guard 12 having substantially a triangular shape at section is disposed outside the turnup portion of the radial carcass 3 in a zone ranging from the side portion 6 to the bead portion 1 in the widthwise direction of the tire, but the arrangement of the rim guard 12 is not essential in the tire according to the invention, and a rim guard having another shape may be arranged. In the invention, the maximum width part of the tire side portion means a maximum width portion when the rim guard 12 is not existent.
In the tires of FIGS. 1 and 2, a reinforcing cord layer 8 is disposed outside the radial carcass 3 and in at least

a part of a region A ranging from a belt end to a maximum width part of a tire side portion and a region B ranging from a neighborhood of a bead core to a bead filler. Moreover, the number of the reinforcing cord layers may be one or more. The structure of the reinforcing cord layer 8 is not particularly limited, and may take, for example, a case that the reinforcing cord layer 8 is extended from the end portion of the belt 10 along the inside of the radial carcass 3 to the neighborhood of the bead core 2 embedded in the bead portion 1 between the radial carcass 3 and the side reinforcing rubber layer 7 as shown in FIG. 1 , or a case that the reinforcing cord layer 8 is arranged between the radial carcass 3 and the side reinforcing rubber layer 7 in a zone ranging from the end portion of the belt 10 to the end part of the turnup portion of the carcass, as shown in FIG. 2.

In the run-flat tire according to the invention, a cord constituting the carcass ply and a cord constituting the reinforcing cord layer 8 are required to be a polyketone fiber cord satisfying the following conditions of the following equations (I) and (II):

$$\sigma \geq -0.01 \times E + 1.2 \cdots (I)$$

$$\sigma \geq 0.02 \cdots (II)$$

[wherein σ is a thermal shrinkage stress at 177°C (cN/dtex); and E is an elastic modulus at 25°C under a load of 49 N (cN/dtex)]. The polyketone fiber cord has a higher rigidity as compared with a rayon cord or the like and also has a heat shrinkability along with a large thermal shrinkage stress under high temperature of not less than about 100°C.

As shown in FIG. 9, when the run-flat tire of the side reinforcement type is rendered into an internal pressure of zero, it is known that the bending rigidity is effectively developed in the side portion 6 by supporting compression stress with the side reinforcing rubber layer 7 and tensile stress with the carcass 3. Similarly, it is known that the bending rigidity is effectively developed in the bead portion 1 by supporting compression stress with the bead filler 9 and tensile stress with the carcass 3. However, rubber modulus lowers due to the rise of the temperature based on the interior heat generation in the run-flat running, so that even when the run-flat running is continued even under a constant load, the deflection of the tire becomes gradually large to finally cause the rubber breakage.

On the contrary, when the polyketone fiber cord is used as a reinforcing cord for the carcass 3, the carcass ply is shrunk due to the rise of the temperature accompanied with the run-flat running to develop a high thermal shrinkage stress, and hence the bending rigidity in a direction withstanding to the deflection of the tire is added at a higher temperature to largely delay the proceeding of the tire deflection, whereby the run-flat durability can be improved.

Moreover, when the polyketone fiber cord used does not satisfy the relationship of the equation (I), as a cord having a large thermal shrinkage stress σ but a low elastic modulus E is used, the deflection of the tire in the run-flat running cannot be suppressed sufficiently and the run-flat durability of the tire is deteriorated, while as a cord having a high elastic modulus E but a small thermal shrinkage stress σ is used, the longitudinal spring of the tire in the usual running becomes large and the ride comfort of the tire in the usual running is deteriorated. Also, when the thermal shrinkage stress σ at 177°C of the cord used is less than 0.02 cN/dtex, the deflection quantity in the run-flat running becomes large and the run-flat durability is insufficient.

The polyketone fiber cord is preferable to have a thermal shrinkage stress σ at 177°C of not more than 1.5 cN/dtex. When the thermal shrinkage stress σ at 177°C of the polyketone fiber cord exceeds 1.5 cN/dtex, the shrinkage force during the vulcanization becomes excessively large, and as a result, the cord disorder and rubber disarray inside the tire are caused to bring about the deteriorations of the durability and uniformity. Also, the polyketone fiber cord more preferably has a thermal shrinkage stress σ at 177°C of not less than 0.20 cN/dtex from a viewpoint that the tire deformation is sufficiently suppressed in the run-flat running, more preferably a thermal shrinkage stress σ at 177°C of not less than 0.30 cN/dtex, further preferably more than 0.4 cN/dtex from a viewpoint that the tire deformation is surely suppressed in the run-flat running. Moreover, the polyketone fiber cord preferably has an elastic modulus E at 25°C under a load of 49 N of not less than 30 cN/dtex from a viewpoint that the tire deformation in the run-flat running is suppressed sufficiently, more preferably an elastic modulus E under a load of 49N of not less than 80 cN/dtex from a viewpoint that the tire deformation in the run-flat running is suppressed surely. Furthermore, the polyketone fiber cord has preferably an elastic modulus E at 25°C under a load of 49N of not more than 170 cN/dtex from a viewpoint that the fatigue resistance is ensured sufficiently, more preferably an elastic modulus E under a load of 49N of not more than 150 cN/dtex from a viewpoint that the fatigue resistance is made better.

By the way, in order to pull out the effect by the application of the reinforcing cord layer 8 comprising the polyketone fiber cord at maximum, it is effective to focusedly arrange the reinforcing cord layer 8 in a site of applying a large tensile stress to the carcass ply in the run-flat running. As a result of analysis on numerical value through a computer, it is revealed that such a site is a region A ranging from a belt end to a maximum width part of a tire side portion and a

region B ranging from a neighborhood of a bead core to a bead filler. Therefore, by disposing the reinforcing cord layer 8 using the polyketone fiber cord in at least a part of the region A ranging from a belt end to a maximum width part of a tire side portion and the region B ranging from a neighborhood of a bead core to a bead filler can be effectively improved the run-flat durability of the tire without increasing the tire weight.

Also, the tire weight can be largely reduced, for example, by replacing the carcass comprised of two carcass plies using the conventional rayon (see FIG. 5) with one carcass ply using the polyketone fiber cord and one reinforcing cord layer using the polyketone fiber cord. Furthermore, by applying the side reinforcing rubber layer 7 thinned so that the run-flat durability is made equal to that of the conventional product can be further reduced the tire weight and also it is made possible to decrease the longitudinal spring of the tire to improve the ride comfort.

As mentioned above, there is a problem that as the number of carcass plies constituting the carcass 3 is decreased, the durability lowers against an instant large input on an uneven road surface (projections, pot holes) or a heaving road or against a local input (side cut) to the side portion 6. On the contrary, when the reinforcing cord layer 8 is disposed in the region A ranging from a belt end to a maximum width part of a tire side portion, the side cut resistance can be improved as compared with the tire comprising the carcass comprised of two carcass plies using the conventional rayon. Also, when the reinforcing cord layer 8 is disposed in the region B ranging from a neighborhood of the bead core 2 to the bead filler 9, the durability against the pot hole input or the instant large load input on heaving road can be improved as compared with the tire comprising the carcass comprised of two carcass plies using the conventional rayon. Further, when the reinforcing cord layers are disposed on the region A ranging from a belt end to a maximum width part of a tire side portion and the region B ranging from a neighborhood of a bead core to a bead filler, the tire strength against an irregular input on a rough road can be improved and also the run-flat durability can be further improved.

Moreover, as a means for simultaneously attaining the improvement of the run-flat durability, the improvement of the durability on rough road or the like and the reduction of the tire weight, there is a method wherein the structure of the carcass 3 is rendered into an envelop structure as shown in FIG. 6 (a structure of extending the turnup end of the carcass 3 beneath the belt 10), but there is a problem that the tire uniformity lowers due to the overlapping of joint portions of the carcass 3 in this method. On the contrary, when the carcass 3 having the envelop structure with the conventional rayon is replaced, for example, with one carcass ply using the polyketone fiber cord and one reinforcing cord layer using the polyketone fiber cord, the joint portions of the carcass 3 are not overlapped and hence the deterioration of the tire uniformity can be avoided.

In the run-flat tire according to the invention, the angle of the polyketone fiber cord in the reinforcing cord layer 8 with respect to the radial direction of the tire is preferable to be not more than 5°. In order to mitigate tensile stress to the carcass by the reinforcing cord layer 8 in the tire according to the invention, the reinforcing cord layer 8 formed in the cord fabric of the polyketone fiber cords is arranged so that the angle of the polyketone fiber cord is not more than 5° with respect to the radial direction of the tire, whereby tensile stress to the carcass 3 can be mitigated effectively.

The polyketone fiber is preferable to be formed by twisting two or three filament bundles of polyketone having a fineness of 500-2000 dtex. When the fineness of the filament bundle used in the polyketone fiber cord is less than 500 dtex, the elastic modulus and thermal shrinkage stress are insufficient, while when it exceeds 2000 dtex, the diameter of the cord becomes thick and the end count cannot be made dense. Moreover, even if the number of the filament bundles of polyketone is 4 or more, as long as the relationship of the equations (I) and (II) is satisfied, the number of the filament bundles is not particularly limited.

The polyketone fiber cord is preferable to have a reversibility of shrinking at a high temperature and stretching in the turning to room temperature. In this case, the polyketone fiber cords in the carcass ply and the reinforcing cord layer 8 shrink to enhance the rigidity at an elevated temperature or in the run-flat running, and hence the deflection of the side portion in the tire can be suppressed, while the polyketone fiber cords in the cord layer stretch at low temperature or in the usual running to lower the rigidity and the longitudinal spring of the tire, and hence the deterioration of the ride comfort of the tire in the usual running can be suppressed. Also, by using the reversible polyketone fiber cord having a difference between the thermal shrinkage stresses at 20°C and 177°C of not less than 0.20 cN/dtex, preferably not less than 0.25 cN/dtex, the effects during the usual running and run-flat running can be simultaneously established.

The polyketone fiber cord used in the carcass ply of the run-flat tire according to the invention is preferable to have a twisting coefficient (Nt) defined by the following equation (III) of not less than 0.34:

$$Nt = \tan\theta = 0.001 \times N \times (0.125 \times D/\rho)^{1/2} \cdots \text{(III)}$$

[wherein N is a twisting number (turns/10 cm) and $\rho$ is a specific gravity of cord (g/cm$^3$) and D is a total decitex number of cord (dtex)]. When the twisting coefficient (Nt) of the polyketone fiber cord used in the carcass ply is less than 0.34, the fatigue property is deteriorated and the durability is lacking. Also, in the carcass ply of the tire according to the invention, it is preferable that the end count of the polyketone fiber cords is within a range of 35-60 (cords/50 mm). When

the end count of the polyketone fiber cords in the carcass ply is less than 35 (cords/50 mm), the carcass strength is lacking and the durability is lacking. Moreover, even if the end count exceeds 60 (cords/50 mm), it is not particularly limited as long as the counting is possible.

The polyketone fiber cord used in the reinforcing cord layer 8 of the run-flat tire according to the invention is preferable to have a twisting coefficient (Nt) defined by the above-described equation (III) of not less than 0.25. When the twisting coefficient (Nt) of the polyketone fiber cord used in the reinforcing cord layer 8 is less than 0.25, the fatigue property is deteriorated and the durability is lacking. Also, in the reinforcing cord layer 8 of the tire according to the invention, it is preferable that the end count of the polyketone fiber cords is within a range of 5-60 (cords/50 mm). When the end count of the polyketone fiber cords in the reinforcing cord layer 8 is less than 5 (cords/50 mm), there is a tendency that the deflection of the tire cannot be sufficiently suppressed in the run-flat running and the run-flat durability of the tire cannot be sufficiently improved, while when it exceeds 60 (cords/50 mm), the longitudinal spring of the tire rises in the usual running and there is a tendency that the ride comfort of the tire is deteriorated in the usual running.

The twisting structure of the polyketone fiber cord is not particularly limited, and as the polyketone cord may be used, for example, ones obtained by twisting a plurality of filament bundles of polyketone, or ones obtained by twisting one filament bundle of polyketone. As a polyketone being a raw material of the polyketone fiber cord is preferable a polyketone substantially having a repeating unit represented by the following general formula (IV):

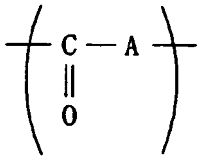 ···(IV)

[wherein A is a moiety derived from an unsaturated compound polymerized with unsaturated bonds, and may be same or different in each of repeating units]. Among the polyketones, a polyketone wherein not less than 97 mol% of the repeating unit is 1-oxotrimethylene [$-CH_2-CH_2-CO-$] is preferable, a polyketone wherein not less than 99 mol% is 1-oxotrimethylene is more preferable, and a polyketone wherein 100 mol% is 1-oxotrimethylene is most preferable.

In the polyketone as the raw material of the polyketone fiber cord, ketone groups may be partly bonded with each other or moieties derived from the unsaturated compound may be bonded with each other, but it is preferable that a ratio of alternate arrangement of the moiety derived from the unsaturated compound and the ketone group is not less than 90% by mass, more preferably not less than 97% by mass, most preferably 100% by mass.

The unsaturated compound forming A in the formula (IV) is most preferably ethylene, and may be an unsaturated hydrocarbon other than ethylene such as propylene, butene, pentene, cyclopentene, hexene, cyclohexene, heptene, octene, nonene, decene, dodecene, styrene, acetylene, allene or the like; a compound containing an unsaturated bond such as methyl acrylate, methyl metacrylate, vinyl acetate, acrylamide, hydroxyethyl metacrylate, undecenic acid, undecenol, 6-chlorohexene, N-vinylpyrolidone, diethylester of sulnylphosphonic acid, sodium styrenesulfonate, sodium allylsulfonate, vinylpyrolidone, vinyl chloride or the like; and so on.

As the polymerization degree of the polyketone, it is preferable that a limit viscosity [η] defined by the following formula:

$$[\eta] = \lim_{C \to 0} \frac{(T-t)}{(t \cdot C)}$$

[wherein t is a passing time of hexafluoroisopropanol having a purity of not less than 98% at 25°C through a viscosity tube, and T is a passing time of a diluted solution of polyketone dissolved in hexafluoroisopropanol at 25°C through the viscosity tube; and C is a mass (g) of a solute in 100 mL of the diluted solution] is within a range of 1 to 20 dL/g, more preferably 2 to 10 dL/g, even more preferably 3 to 8 dL/g. When the limit viscosity is less than 1 dL/g, the molecular weight is too small and it is difficult to obtain a high-strength polyketone fiber cord, but also troubles such as napping, breaking and the like are frequently caused in the steps of spinning, drying and drawing. While, when the limit viscosity exceeds 20 dL/g, the synthesis of the polymer takes great time and cost, but also it is difficult to uniformly dissolve the polymer, which may badly affect the spinability and properties.

As a method for forming polyketone fiber are preferable (i) a method comprising the steps of spinning an undrawn fiber and subjecting to a multi-stage heat drawing in which a final drawing at the multi-stage heat drawing step is carried out at specified temperature and draft ratio, and (ii) a method comprising the steps of spinning an undrawn fiber, subjecting to heat drawing and then quenching under a high tension. By forming the polyketone fiber through the method (i) or (ii), desirable filaments suitable for the production of the polyketone fiber cord can be obtained.

The method for spinning the undrawn polyketone fiber is not particularly limited, but may adopt the conventionally known methods. Concretely, there are mentioned a wet spinning method using an organic solvent such as hexafluoroisopropanol, m-cresol or the like as disclosed in JP-A-H02-112413, JP-A-H04-228613 and JP-A-H04-505344, and a wet spinning method using an aqueous solution of zinc salt, calcium salt, thiocyanate, iron salt or the like as disclosed in WO99/18143, WO00/09611, JP-A-2001-164422, JP-A-2004-218189 and JP-A-2004-285221. Among them, the wet spinning method using the aqueous solution of the salt is preferable.

In the wet spinning method using the organic solvent, a polyketone polymer is dissolved in hexafluoroisopropanol, m-cresol or the like at a concentration of 0.25 to 20% by mass and extruded through a spinning nozzle to from a fiber and then the solvent is removed in a non-solvent bath of toluene, ethanol, isopropanol, n-hexane, isooctane, acetone, methyl ethyl ketone or the like, whereby the undrawn polyketone fiber can be obtained after the washing.

In the wet spinning method using the aqueous solution, the polyketone polymer is dissolved in an aqueous solution of zinc salt, calcium salt, thiocyanate, iron salt or the like at a concentration of 2 to 30% by mass and extruded from a spinning nozzle into a coagulation bath at 50 to 130°C to conduct gel spinning and then desalted and dried to obtain the undrawn polyketone fiber. In the aqueous solution dissolving the polyketone polymer, it is preferable to use a mixture of a zinc halide and a halide of an alkali metal or an alkaline earth metal. In the coagulation bath can be used water, an aqueous solution of a metal salt, or an organic solvent such as acetone, methanol or the like.

As the method for drawing the undrawn fiber is preferable a heat drawing method wherein the undrawn fiber is drawn by heating to a temperature higher than the glass transition temperature of the undrawn fiber. Moreover, the drawing of the undrawn fiber in the above method (ii) may be carried out at one stage, but it is preferable to conduct the multi-stage drawing. The heat drawing method is not particularly limited, and may adopt a method of running the fiber on, for example, a heat roll or a heat plate, and so on. At this moment, the heat drawing temperature is preferably within a range of 110°C to (a melting point of polyketone), and the total drawing ratio is preferably not less than 10 times.

When the formation of the polyketone fiber is carried out through the method (i), the temperature at the final drawing step of the multi-stage drawing is preferable to be within a range of 110°C to (drawing temperature at drawing step just before the final drawing step - 3°C), and the drawing ratio at the final drawing step is preferable to be within a range of 1.01 to 1.5 times. On the other hand, when the formation of the polyketone fiber is carried out through the method (ii), the tension applied to the fiber after the heat drawing is preferable to be within a range of 0.5 to 4 cN/dtex, and the cooling rate in the quenching is preferable to be not less than 30°C/second, and the cooling-end temperature in the quenching is preferable to be not higher than 50°C. The quenching method of the heat-drawn polyketone fiber is not particularly limited, and may adopt the conventionally known methods. Concretely, the cooling method using the roll is preferable. Moreover, the thus obtained polyketone fiber is large in the retention of elastic strain, so that it is preferable that the fiber is usually subjected to a relaxation heat treatment so as to make the fiber length shorter than the fiber length after the heat drawing. At this moment, the temperature of the relaxation heat treatment is preferable to be within a range of 50 to 100°C and the relaxation ratio is preferable to be within a range of 0.980 to 0.999.

The production method of the polyketone fiber cord is not particularly limited. When the polyketone fiber cord is a structure formed by twisting two filament bundles of polyketone or a twin strand structure, it can be obtained as a twisted cord, for example, by ply-twisting the filament bundles of polyketone, combining two bundles and then cable-twisting them in an opposite direction. On the other hand, when the polyketone fiber cord is a structure formed by twisting one filament bundle of polyketone or a single strand structure, it can be obtained as a twisted cord, for example, by aligning and twisting the filament bundle of polyketone in one direction.

The polyketone fiber cords thus obtained are rubberized to obtain a cord/rubber composite used in the carcass ply and the reinforcing cord layer. The coating rubber for the polyketone fiber cord is not particularly limited, and a coating rubber used in the conventional belt reinforcing layer can be used. Moreover, the polyketone fiber cord may be treated with an adhesive to improve adhesiveness with the coating rubber before the rubberization of the polyketone fiber cords.

The run-flat tire according to the invention can be produced according to a usual manner by using as a carcass ply the above-mentioned cord/rubber composite formed by coating the polyketone fiber cords with the coating rubber and further disposing as a reinforcing cord layer 8 the above-mentioned cord/rubber composite formed by coating the polyketone fiber cords with the coating rubber in at least a part of the outside of the carcass. Moreover, as a gas filled in the run-flat tire according to the invention may be used usual air or air having a changed oxygen partial pressure, or an inert gas such as nitrogen or the like.

<EXAMPLES>

The following examples are given in illustration of the invention and are not intended as limitations thereof.

There are prepared run-flat tires for passenger cars having a structure shown in Tables 1 to 4 and a tire size of 245/50R18. Moreover, the elastic modulus E at 25°C under a load of 49N and thermal shrinkage stress $\sigma$ at 177°C of the polyketone fiber cord used in the carcass ply and the reinforcing cord layer are shown in Tables 1 and 2.

In tires of Comparative Examples 1 to 4 and tires of Examples 1 and 2, a side reinforcing rubber layer having

a crescent shape at section is disposed between the carcass and the innerliner, and a maximum gauge of a side reinforcing rubber layer is changed so that a run-flat durability evaluated as mentioned later is made equal to that of the tire of Comparative Example 1. Furthermore, in the tires of Comparative Examples 1 to 4 and the tires of Examples 1 and 2, the belt is comprised of two belt layers, and an angle of a belt cord constituting the belt layer with respect to an axis in a radial direction is 64°. Also, the belt reinforcing layer in the tires of Comparative Examples 1 to 4 and the tires of Examples 1 and 2 is a structure of "one cap + one layer". Various conditions of each of the tires are shown in Tables 1 and 2. Moreover, the angle of the polyketone fiber cord in the reinforcing cord layer of the tires of Examples 1 and 2 with respect to the radial direction of the tire is shown in Table 2.

In this test example, the run-flat durability is evaluated by subjecting the tire to be tested to a drum test under conditions of load: 635 kgf and speed: 89 km/h without filling an internal pressure to measure a running distance until troubles are caused in the tire. Also, the ride comfort is evaluated from a value of the longitudinal spring of the tire inflated under an internal pressure of 230 kPa. Further, the side cut resistance is evaluated by setting the tire inflated under an internal pressure of 230 kPa at an inclined state of 5° toward a side of a pendulum with respect to a vertical direction and pushing a convex part of a striker in a pendulum type impact score testing machine to calculate impact energy when the carcass ply is broken to confirm the bulging on the surface of the tire. In addition, the tire uniformity is evaluated by a magnitude of a change of force in the radial direction (RFV) generated during one rotation at a constant radius. Moreover, the tire weight is shown as a value of a rot product in Tables 1 and 2.

In this test example, an evaluation index as a relative evaluation to tires of Comparative Examples 2 to 4 and Examples 1 and 2 is calculated on the basis that an evaluation index of the tire of Comparative Example 1 is 100. The evaluations results are also shown in Tables 1 and 2. In the evaluation results of Tables 1 and 2, the larger the evaluation index value, the better the run-flat durable distance and side cut resistance, while the smaller the evaluation index value, the better the other performances.

Table 1

| | Comparative Example 1 | Comparative Example 2 | Comparative Example 3 | Comparative Example 4 |
|---|---|---|---|---|
| Carcass structure | 2P H/L | 2P H/L | 1P enve | 1P H |
| Cord material in carcass | Rayon | Polyketone | Polyketone | Polyketone |
| Cord structure (dtex/cords) | 1840/2 | 1670/2 | 1670/2 | 1670/2 |
| Ply twist × cable twist (turns/10 cm) | 47×47 | 47×47 | 47×47 | 47×47 |
| Twisting coefficient | 0.82 | 0.84 | 0.84 | 0.84 |
| Elastic modulus E at 25°C under a load of 49N (cN/dtex) | 32 | 124 | 124 | 124 |
| Thermal shrinkage stress $\sigma$ at 177°C (cN/dtex) | 0 | 0.63 | 0.63 | 0.63 |
| End count (cords/50 mm) | 50 | 50 | 50 | 50 |
| Presence or absence and width of reinforcing cord layer | absence | absence | absence | absence |
| Material of reinforcing cord layer | - | - | - | - |
| Cord structure (dtex/cords) | - | - | - | - |

(continued)

| | Comparative Example 1 | Comparative Example 2 | Comparative Example 3 | Comparative Example 4 |
|---|---|---|---|---|
| Ply twist × Cable twist (turns/10 cm) | - | - | - | - |
| Twisting coefficient | - | - | - | - |
| Elastic modulus E at 25°C under a load of 49N (cN/dtex) | - | - | - | - |
| Thermal shrinkage stress σ at 177°C (cN/dtex) | - | - | - | - |
| End count (cords/50 mm) | - | - | - | - |
| Inclination angle (°) | - | - | - | - |
| Tire structure | FIG. 5 | FIG. 5 | FIG. 6 | FIG. 7 |
| Run-flat durable distance | 100 | 100 | 100 | 100 |
| Maximum gauge of side reinforcing rubber layer | 100 | 86 | 88 | 102 |
| Longitudinal spring in normal internal pressure (ride comfort in usual running) | 100 | 96 | 96 | 92 |
| Tire weight | 100 | 100 | 95 | 93 |
| Side cut resistance | 100 | 131 | 127 | 82 |
| Uniformity | 100 | 78 | 122 | 82 |

Table 2

| | Example 1 | Example 2 |
|---|---|---|
| arcass structure | 1PH | 1PH |
| Cord material in carcass | Polyketone | Polyketone |
| Cord structure (dtex/cords) | 1670/2 | 1670/2 |
| Ply twist × cable twist (turns/10 cm) | 47x47 | 47×47 |
| Twisting coefficient | 0.84 | 0.84 |
| Elastic modulus E at 25°C under a load of 49N (cN/dtex) | 124 | 124 |
| Thermal shrinkage stress σ at 177°C (cN/dtex) | 0.63 | 0.63 |
| End count (cords/50 mm) | 50 | 50 |
| Presence or absence and width of reinforcing cord layer | presence 50 mm | presence 100 mm |
| Material of reinforcing cord layer | Polyketone | Polyketone |
| Cord structure (dtex/cords) | 1670/2 | 1670/2 |

(continued)

| | Example 1 | Example 2 |
|---|---|---|
| Ply twist × Cable twist (turns/10 cm) | 47×47 | 47×47 |
| Twisting coefficient | 0.84 | 0.84 |
| Elastic modulus E at 25°C under a load of 49N (cN/dtex) | 124 | 124 |
| Thermal shrinkage stress σ at 177°C (cN/dtex) | 0.63 | 0.63 |
| End count (cords/50 mm) | 50 | 50 |
| Inclination angle (°) | 10 | 10 |
| Tire structure | FIG. 2 | FIG. 1 |
| Run-flat durable distance | 100 | 100 |
| Maximum gauge of side reinforcing rubber layer | 96 | 90 |
| Longitudinal spring in normal internal pressure (ride comfort in usual running) | 97 | 94 |
| Tire weight | 95 | 93 |
| Side cut resistance | 120 | 128 |
| Uniformity | 73 | 74 |

As seen from Tables 1 and 2, all performances in the tires of Examples 1 to 2 are better evaluation as compared with the tire of Comparative Example 1. On the other hand, the tire of Comparative Example 2 has the same two carcass ply structure as in the tire of Comparative Example 1, so that the tire weight is not improved as compared with the tire of Comparative Example 1, while the tire of Comparative Example 3 has a carcass envelop structure, so that the uniformity is deteriorated as compared with the tire of Comparative Example 1, and the tire of Comparative Example 4 has a one ply carcass structure and no reinforcing cord layer, so that the maximum gauge of the side reinforcing rubber layer is deteriorated and also the side cut resistance is deteriorated as compared with the tire of Comparative Example 1.

## Claims

**1.** A run-flat tire comprising a radial carcass (3) toroidally extending between a pair of bead cores (2) embedded in respective bead portions (1) and comprised of one or more carcass plies, a tread portion (4) disposed on an outside of a crown portion of the radial carcass (3) in a radial direction of the tire, a pair of buttress portions (5) located at both end parts of the tread portion (4), a pair of side portions (6) each connecting the buttress portion (5) to the bead portion (1), a pair of side reinforcing rubber layers (7) disposed in the side portions (6) and having a crescent shape at section, a bead filler (9) disposed at an outside of the bead core (2) in the radial direction of the tire and a belt (10) arranged outside the crown portion of the radial carcass (3) in a radial direction of the tire,
**characterised in that** it further comprises a reinforcing cord layer (8) in at least a part of a region A ranging from a belt (10) end to a maximum width part of a tire side portion (6) and a region B ranging from a neighborhood of the bead core (2) to the bead filler (9), wherein the reinforcing layer is arranged in an inside of the radial carcass and in at least a part of an outside of the side reinforcing rubber layer (7),
wherein a cord constituting the carcass ply and a cord constituting the reinforcing cord layer (8) are a polyketone fiber cord satisfying the following conditions of the following equations (I) and (II):

$$\sigma \geq -0.01 \times E + 1.2 \ldots (I)$$

$$\sigma \geq 0.02 \ldots (II)$$

wherein σ is a thermal shrinkage stress at 177°C (cN/dtex); and E is an elastic modulus at 25°C under a load of 49 N (cN/dtex).

**2.** A run-flat tire according to claim 1, wherein an angle of the polyketone fiber cord in the reinforcing cord layer (8)

with respect to the radial direction of the tire is not more than 5°.

3. A run-flat tire according to claim 1, wherein the polyketone fiber cords in the carcass ply and the reinforcing cord layer (8) have an elastic modulus E at 25°C under a load of 49N of 30 to 170 cN/dtex and a thermal shrinkage stress σ at 177°C of 0.2 to 1.5 cN/dtex.

**Patentansprüche**

1. Run-Flat-Reifen, der aufweist: eine radiale Karkasse (3), die sich ringförmig zwischen einem Paar von Wulstkernen (2) erstreckt, die in jeweiligen Wulstabschnitten (1) eingebettet sind und aus einer oder mehreren Karkassenlagen besteht; einen Laufflächenabschnitt (4), der auf einer Außenseite eines Zenitabschnittes der radialen Karkasse (3) in einer radialen Richtung des Reifens angeordnet ist; ein Paar Pfeilerabschnitte (5), die an beiden Endteilen des Laufflächenabschnittes (4) angeordnet sind; ein Paar Seitenabschnitte (6), die jeweils den Pfeilerabschnitt (5) mit dem Wulstabschnitt (1) verbinden; ein Paar Seitenverstärkungsgummilagen (7), die in den Seitenabschnitten (6) angeordnet sind und eine Sichelform im Schnitt aufweisen; einen Kernreiter (9), der auf einer Außenseite des Wulstkernes (2) in der radialen Richtung des Reifens angeordnet ist; und einen Gürtel (10), der außerhalb des Zenitabschnittes der radialen Karkasse (3) in einer radialen Richtung des Reifens angeordnet ist,
**dadurch gekennzeichnet, dass** er außerdem eine Verstärkungskordlage (8) in mindestens einem Teil eines Bereiches A, der sich von einem Ende des Gürtels (10) bis zu einem Teil des Reifenseitenabschnittes (6) mit maximaler Breite erstreckt, und eines Bereiches B aufweist, der sich aus einer Umgebung des Wulstkernes (2) bis zum Kernreiter (9) erstreckt, wobei die Verstärkungslage in einer Innenseite der radialen Karkasse und in mindestens einem Teil einer Außenseite der Seitenverstärkungsgummilage (7) angeordnet ist,
wobei ein Kord, der die Karkassenlage bildet und ein Kord, der die Verstärkungskordlage (8) bildet, ein Polyketonfaserkord ist, der die folgenden Bedingungen der folgenden Gleichungen (I) und (II) erfüllt:

$$\sigma \geq -0{,}01 \text{ x } E + 1{,}2 \ldots \text{(I)}$$

$$\sigma \geq 0{,}02 \ldots \text{(II)}$$

worin σ eine Wärmeschrumpfspannung bei 177 °C (cN/dtex) und E ein Elastizitätsmodul bei 25 °C unter einer Belastung von 49 N (cN/dtex) sind.

2. Run-Flat-Reifen nach Anspruch 1, bei dem ein Winkel des Polyketonfaserkordes in der Verstärkungskordlage (8) mit Bezugnahme auf die radiale Richtung des Reifens nicht größer als 5° ist.

3. Run-Flat-Reifen nach Anspruch 1, bei dem die Polyketonfaserkorde in der Karkassenlage und der Verstärkungskordlage (8) einen Elastizitätsmodul E bei 25 °C unter einer Belastung von 49 N von 30 bis 170 cN/dtex und eine Wärmeschrumpfspannung σ bei 177 °C von 0,2 bis 1,5 cN/dtex aufweisen.

**Revendications**

1. Bandage pneumatique à roulage à plat, comprenant une carcasse radiale (3), s'étendant toroïdalement entre une paire de tringles (2) noyées dans des parties de talon respectives (1) et comprenant une ou plusieurs nappes de carcasse, une partie de bande de roulement (4) agencée sur une partie externe d'une partie de sommet de la carcasse radiale (3), dans une direction radiale du bandage pneumatique, une paire de parties de contrefort (5), agencées au niveau des deux parties d'extrémité de la partie de bande de roulement (4), une paire de parties latérales (6), connectant chacune la partie de contrefort (5) à la partie de talon (1), une paire de couches de gomme de renforcement latérales (7), agencées dans les parties latérales (6) et ayant en section une forme en croissant, un bourrage sur tringle (9), agencé au niveau d'une partie externe de la tringle (2), dans la direction latérale du bandage pneumatique, et une ceinture (10), agencée à l'extérieur de la partie de sommet de la carcasse radiale (3), dans une direction radiale du bandage pneumatique ;
**caractérisé en ce qu'**il comprend en outre une couche de câblés de renforcement (8) dans au moins une partie d'une région A, s'étendant d'une extrémité de la ceinture (10) vers une partie à largeur maximale d'une partie latérale

du bandage pneumatique (6), et une région B, s'étendant d'un voisinage de la tringle (2) vers le bourrage sur tringle (9), la couche de renforcement étant agencée dans une partie interne de la carcasse radiale et dans au moins une partie d'une partie externe de la couche de gomme de renforcement latérale (7) ;
où un câblé constituant la nappe de carcasse et un câblé constituant la couche de câblés de renforcement (8) sont un câblé de fibres de polycétone satisfaisant les conditions suivantes des équations ci-dessous (I) et (II) :

$$\sigma \geq -0{,}01 \text{ x } E + 1{,}2\ldots \text{ (I)}$$

$$\sigma \geq 0{,}02\ldots \text{ (II)}$$

où σ représente une contrainte de retrait thermique à 177°C (cN/dtex) ; et E représente un module d'élasticité à 25° en présence d'une charge de 49 N (cN/dtex).

**2.** Bandage pneumatique à roulage à plat selon la revendication 1, dans lequel un angle formé par la fibre de polycétone dans la couche de câblés de renforcement (8) par rapport à la direction radiale du bandage pneumatique n'est pas supérieur à 5°.

**3.** Bandage pneumatique à roulage à plat selon la revendication 1, dans lequel les câblés de fibres de polycétone dans la nappe de carcasse et la couche de câblés de renforcement (8) ont une module d'élasticité E à 25°C, en présence d'une charge de 49N, compris entre 30 et 170 N/dtex, et une contrainte de retrait thermique σ à 177°C comprise entre 0,2 et 1,5 cN/dtex.

FIG. 1

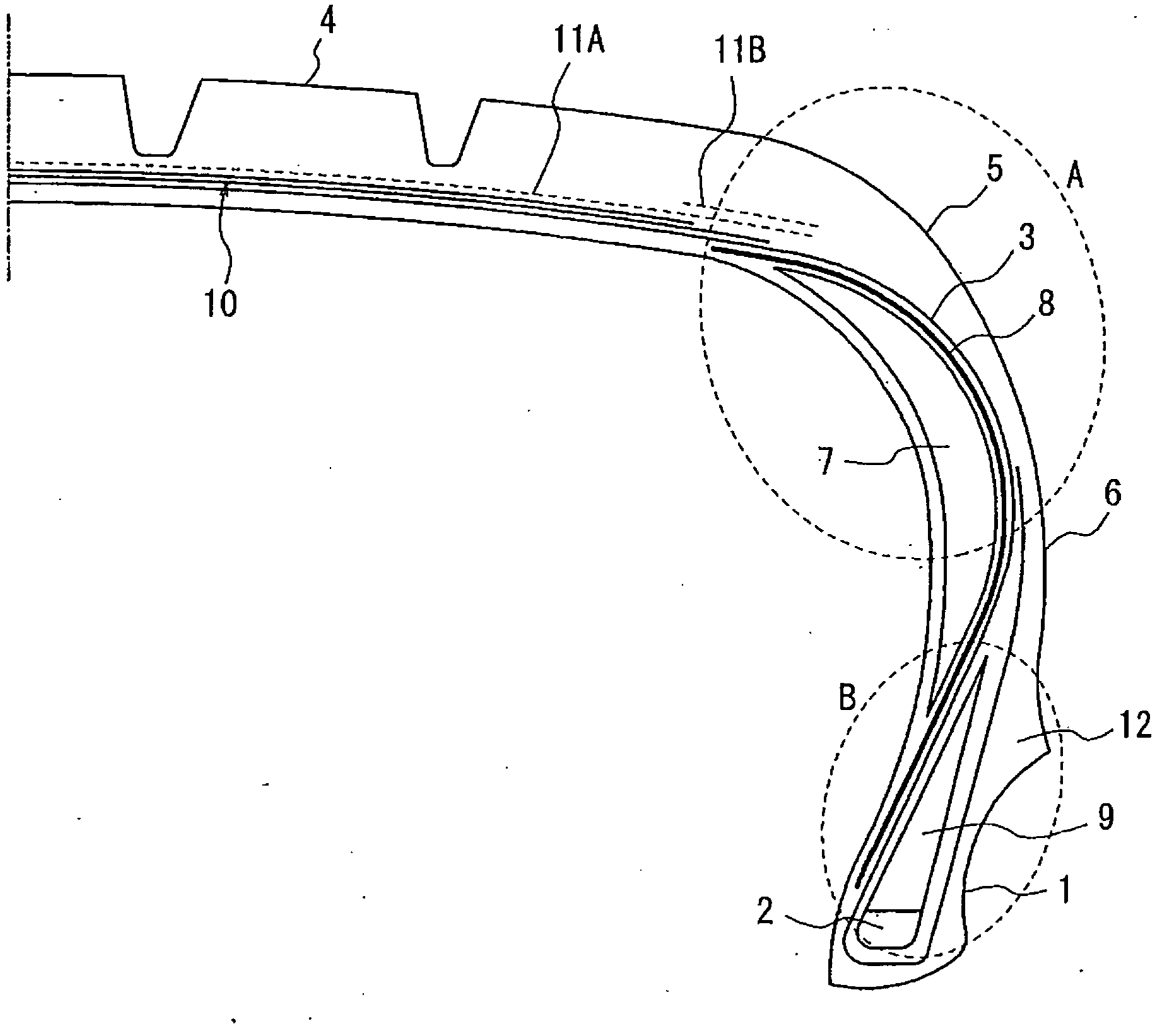

FIG. 2

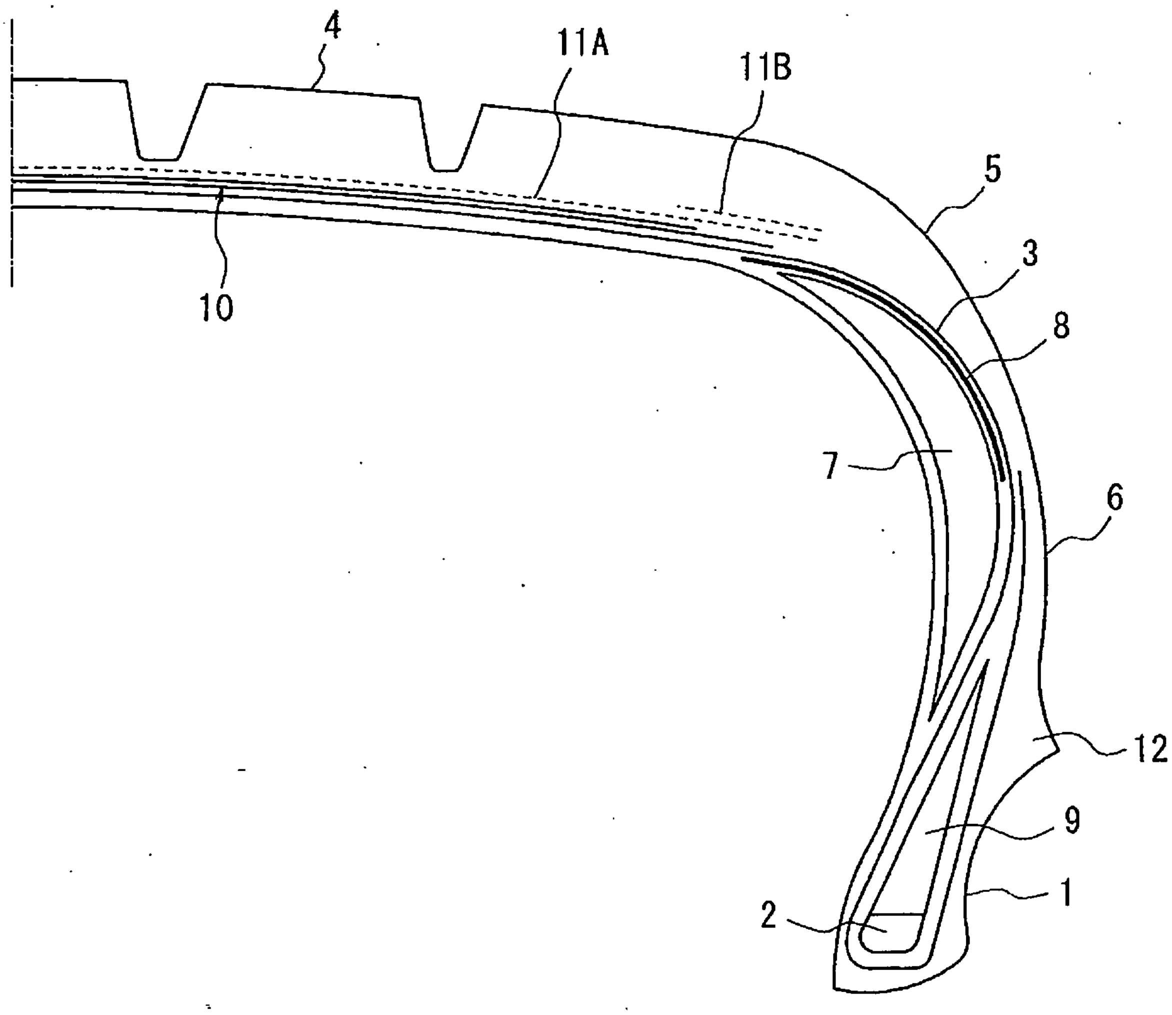

FIG. 3

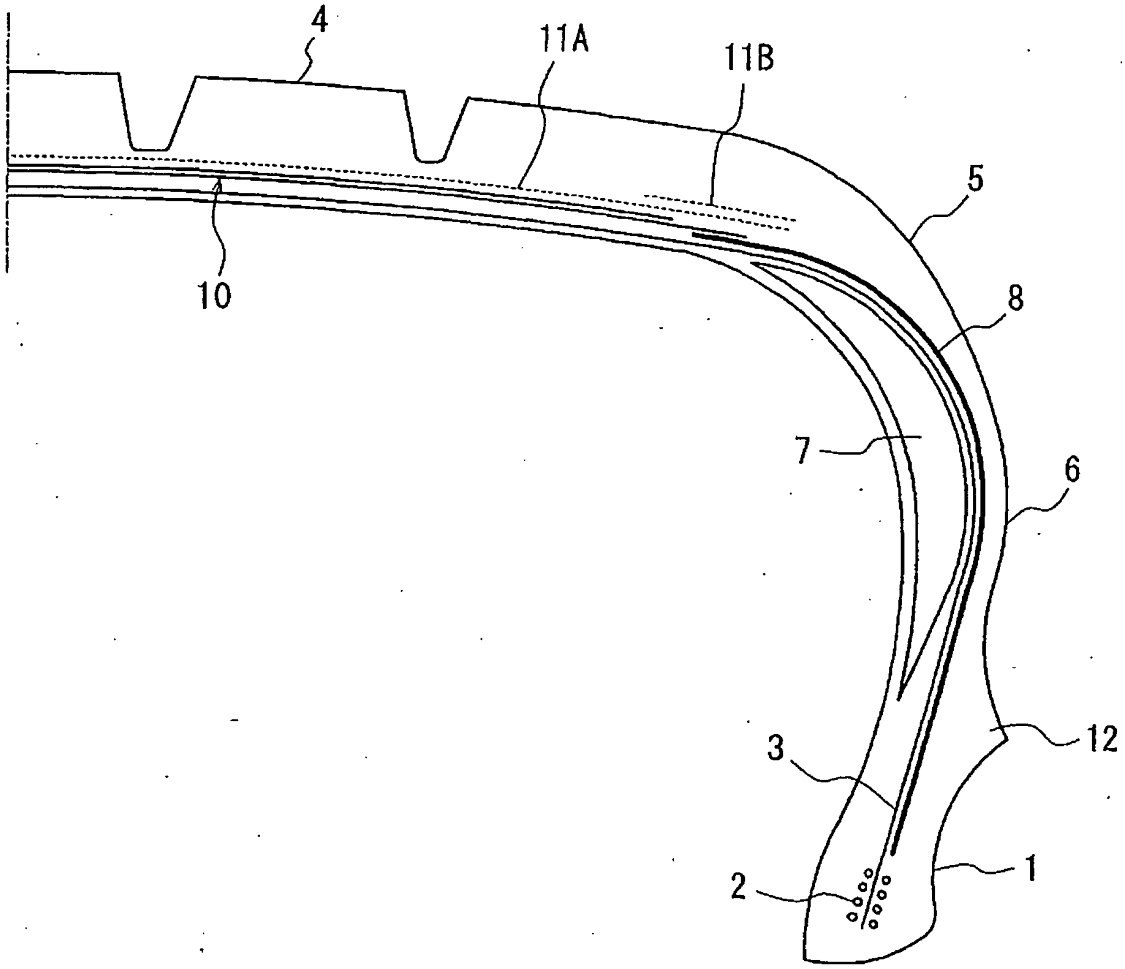

FIG. 4

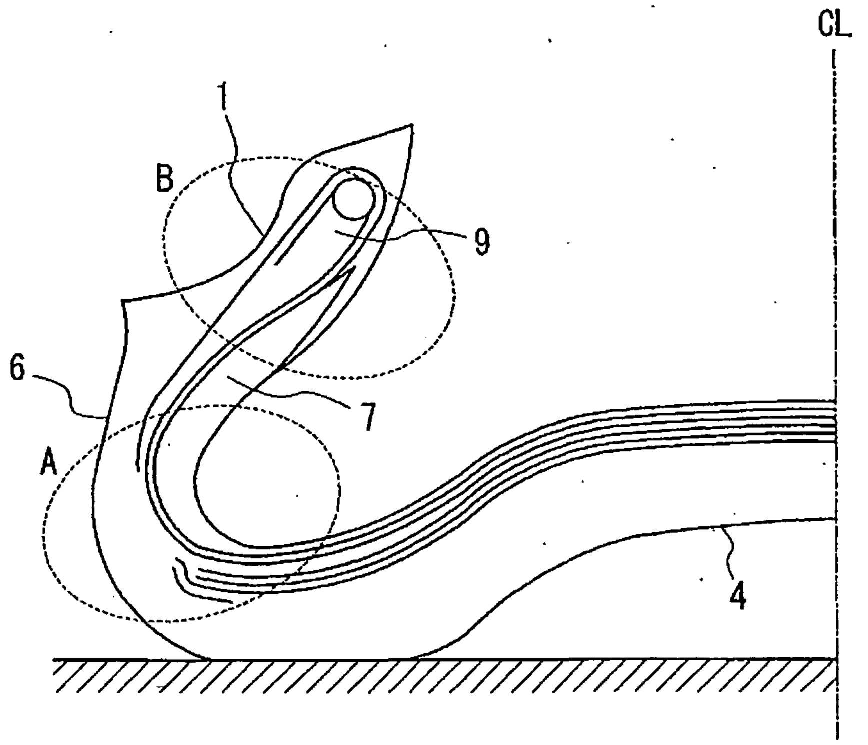

FIG. 5

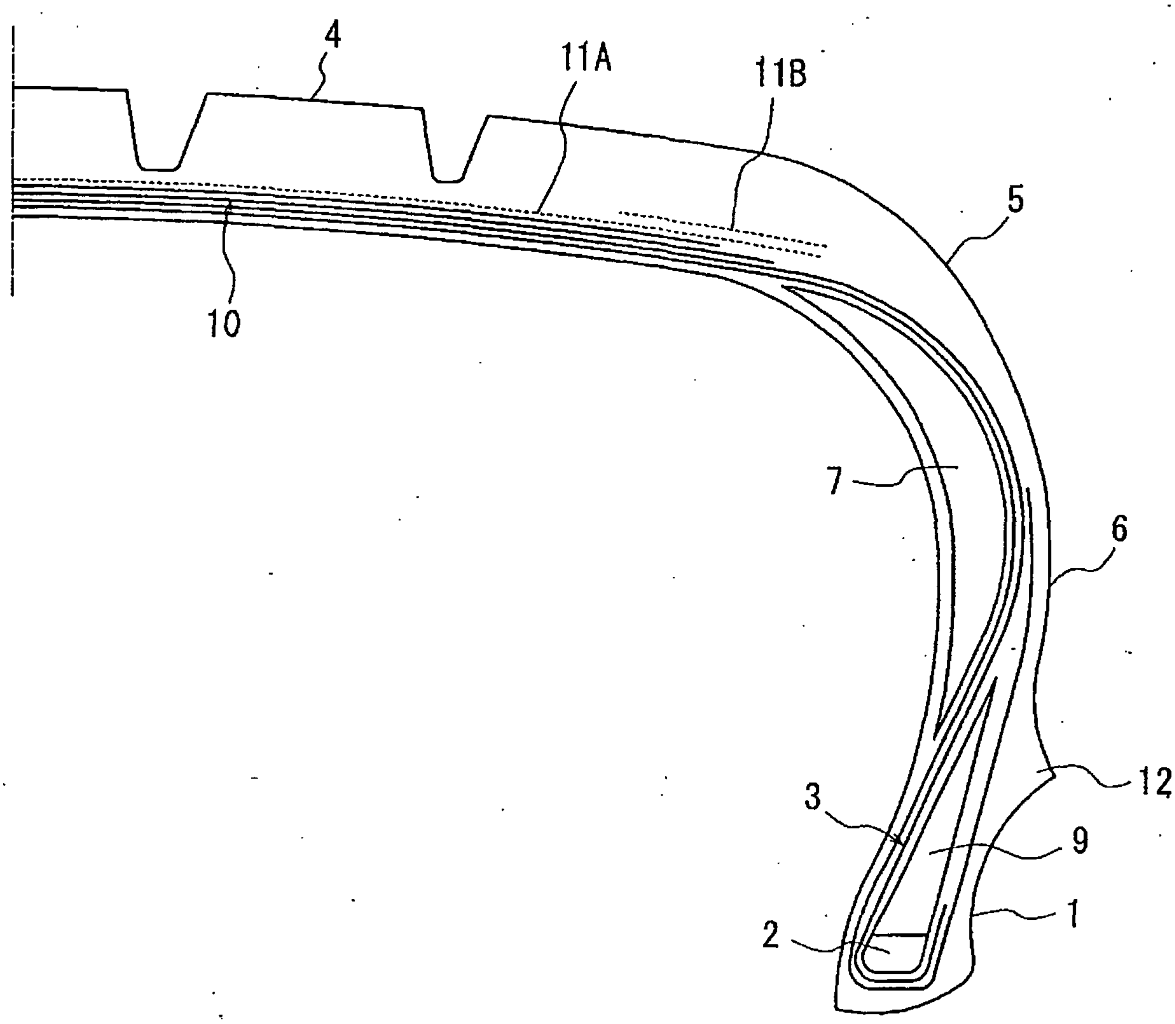

FIG. 6

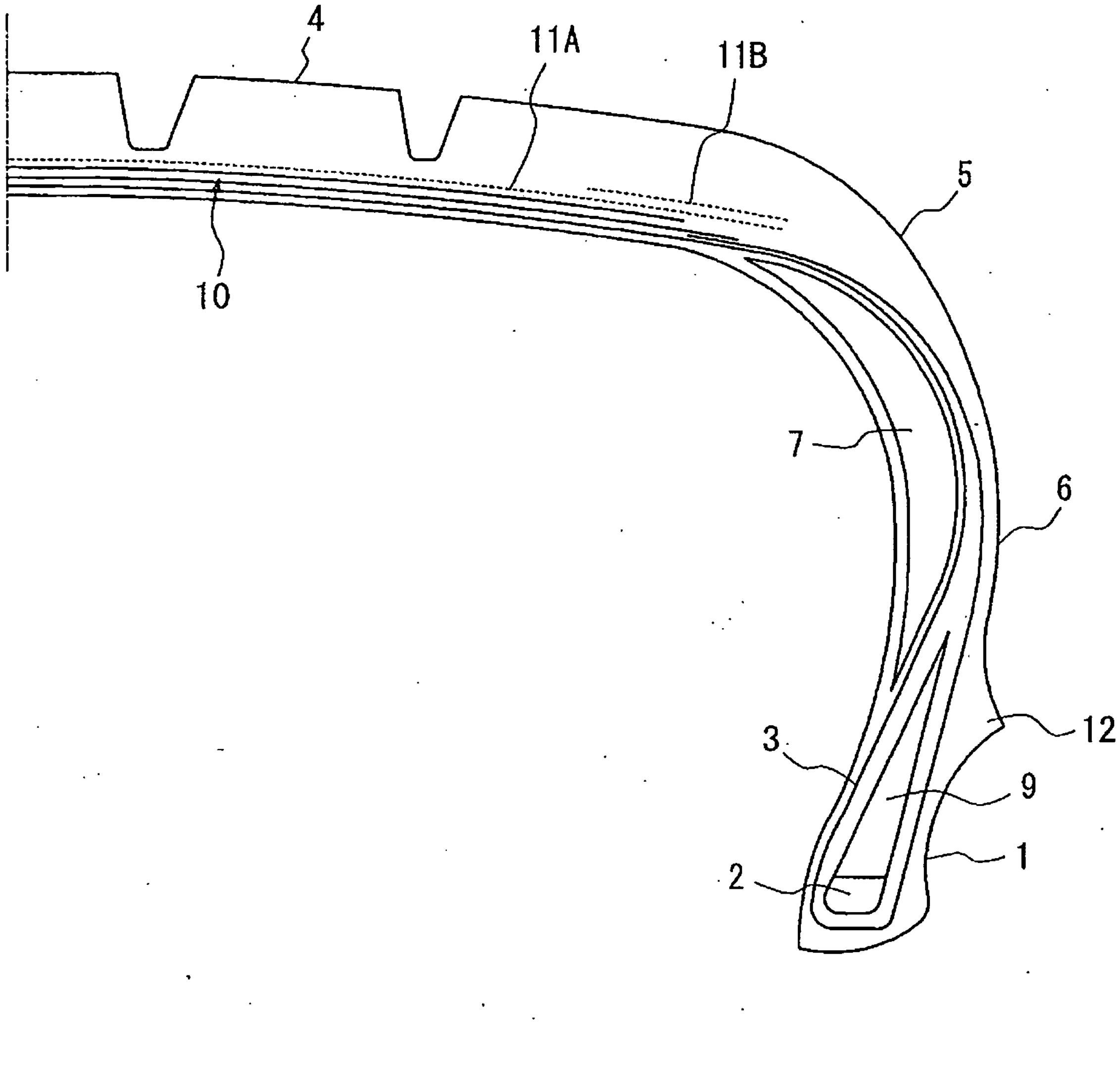

FIG. 7

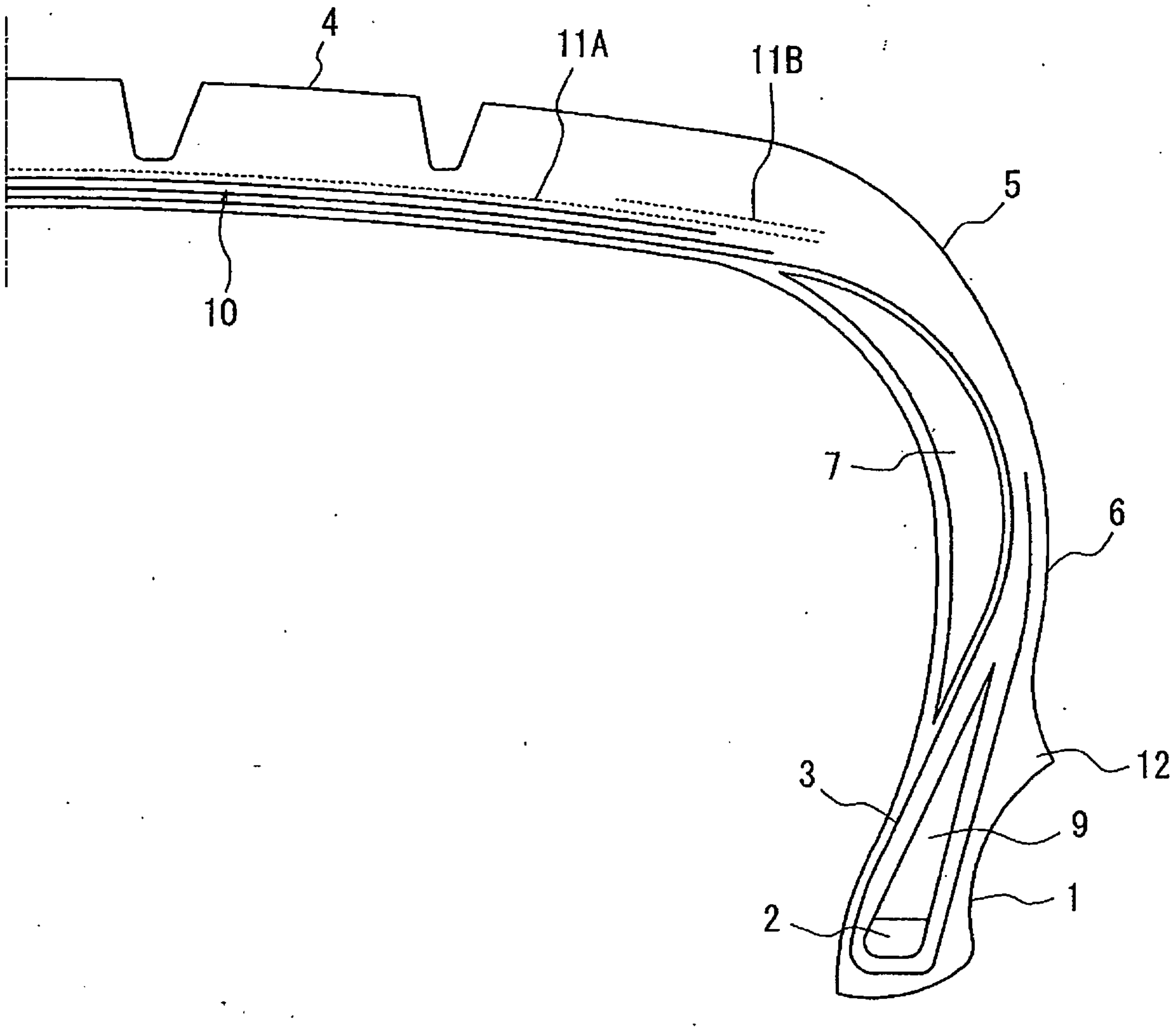

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000264012 A
- JP 2002500587 A
- JP 2002500589 A
- JP 2004306658 A
- EP 1857299 A
- JP H02112413 A
- JP H04228613 A
- JP H04505344 A
- WO 9918143 A
- WO 0009611 A
- JP 2001164422 A
- JP 2004218189 A
- JP 2004285221 A